# EUROPÄISCHE PATENTANMELDUNG

(11) **EP 1 120 566 A1**
(43) Veröffentlichungstag der Anmeldung: **01.08.2001**
(21) Anmeldenummer: 01101173.1
(22) Anmeldetag: 24.01.2001
(51) Int. Cl.: F03G 3/00

(54) **Schwerkraftanlage-Stromerzeugung mittels Gewichtsdruck**

(30) Priorität: 25.01.2000 WO PCT/IB00/00063; 24.10.2000 EP 00203664
(71) Anmelder: Hartmann, Konstantin, 70378 Stuttgart (DE)
(72) Erfinder: Hartmann, Konstantin, 70378 Stuttgart (DE)

(57) **Zusammenfassung**

Schwerkraftanlage - Stromerzeugung mittels Gewichtsdruck durch: einen Zylinder, Schwergewichte, Vierecken, Stahlkreisen, Stahlwellen, Zahnräder, Zahnwellen und Generatoren.
Die Stahlkreisen kommen vom Schwergewicht und vom Gewicht der Schienen, durch: den Zylinder, Vierecken, Stahlwellen, Zahnräder, Zahnwellen in Drehung, dadurch drehen die Stahlkreisen, durch die Zahnwellen die Generatoren.

## Beschreibung

Schwerkraftanlage - Stromerzeugung mittels Gewichtsdruck durch: einen Zylinder, Schwergewichte, Vierecken 1 und 2: ABCD, FGIK, EPUT und MNLW, 8 Stahlkreisen, Stahlwellen, Zahnräder, Zahnwellen und Generatoren.

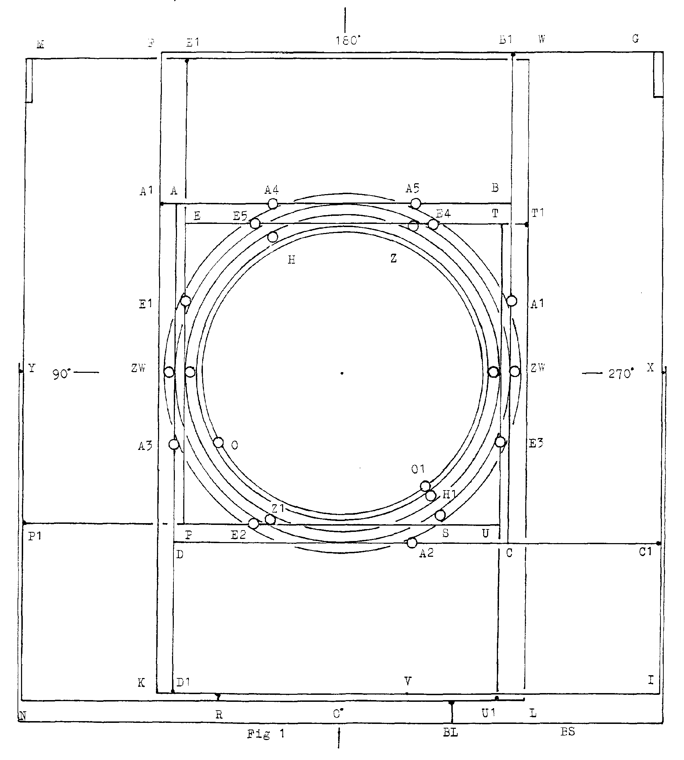

Es zeigt Fig. 1 und wird im folgenden näher beschrieben.

Der Zylinder, 9,4m Durchmesser, 9m Länge, die Stahlkreisen 5,1 und 2 sind: stabil durch zwei Stahlwellen verbunden und bilden den Zylinder.

Auf den Stahlwellen drehen sich die Zahnräder O und O1, auf jeder Stahlwelle drehen sich zwei Zahnräder.

Die Vierecken ABCD, 1 und 2 sind: stabil durch fünf 10m langen Stahlwellen A verbunden. An die Vierecken 1 und 2 sind: stabil die Eckseiten A1A, B1B, C1C, D1D und an die Eckseiten sind die Lager A1, B1, C1 und D1 angebracht.

Das Gewicht der Schienen drückt durch die Ecken B.

Auf den Stahlwellen: A1, A2, A3, A4 und A5 drehen sich die Zahnräder A, auf jeder Stahlwelle drehen sich 2 Zahnräder A.

Die Vierecken FGIK, 1 und 2 sind: drehbar durch 10m langen Schienen: GG1, II1 und VV1 verbunden.

An die Vierecken 1 und 2 sind: an die Ecken G, das Schwergewicht und an die Viereck Seiten GI, in der Schienenmitte, die Lager X angebracht.

Das Gewicht der Schienen drückt durch die Viereck Seiten: FG und KI.

Die Vierecken EPUT, 1 und 2 sind: stabil durch fünf Stahlwellen verbunden.

An die Vierecken 1 und 2 sind: stabil die Eckseiten E1E, P1P, U1U, T1T und an die Eckseiten sind die Lager: E1, P1, U1 und T1 angebracht.

Das Gewicht der Schienen drückt durch die Ecken E.

Auf den Stahlwellen E1, E2, E3, E4 und E5 drehen sich die Zahnräder E, auf jeder Stahlwelle drehen sich zwei Zahnräder E.

Die Vierecken MNLW, 1 und 2 sind: drehbar durch 10m langen Schienen: MM1, NN1 und RR1 verbunden.

An die Vierecken 1 und 2 sind: die Lager R, an die Ecken M, das Schwergewicht und an die Viereck Seiten MN in der Schienenmitte sind die Lager Y angebracht.

Das Gewicht der Schienen drückt durch die Viereck Seiten: MW und NL.

Die 8 Stahlkreisen haben: auf der Außenseite und auf der Innenseite Zahnoberfläche.

Das Gewicht der Schienen drückt durch die Stahlkreisen.

Die Zahnwellen: Z, Z1, H, H1 und S drehen sich durch die Stahlkreisen.

Die vier Zahnwellen, an jede Zahnwelle sind, zwei Generatoren angebracht. Die Zahnwellen drehen: sich auf Lager und drehen die Generatoren.

Die acht Generatoren sind: stabil durch Schienen an die Viereck Seiten: EP, 1 und 2 und BC, 1 und 2 angebracht.

Das Gewicht der Schienen und der Generatoren, drückt durch die Ecken: E und B.

Die Vierecken: MNLW, 1 und 2 und FGIK, 1 und 2 stützen sich in der Zylinderhöhe 90° durch die Lager: X und Y, auf die Bodenschienen, dadurch bleiben die Vierecken 1 und 2 und der Zylinder in der stabilen Lage.

Die Zahnwellen, die Zahnräder und die Stahlkreisen drücken, ziehen und drehen durch die Zahnoberfläche.

Die Vierecken FGIK, 1 und 2 drücken: auf die Lager R und auf die Ecken G drückt das Schwergewicht, dadurch drücken die Vierecken 1 und 2 drehbar: auf die Lager Al, B1, C1, das Schwergewicht und das Gewicht der Schienen drücken durch die Viereck Seiten KI als Hebel: auf die Lager R und durch die Lager D1, gegen das Gewicht der Schienen, längst der Eckseiten D1D, auf die Ecken D, dadurch drücken die Ecken D: durch die Stahlwelle A3, durch die Zahnräder A3, längst der Stahlkreisen 1, 1 und 2 und ziehen durch die Stahlwelle A2 und die Lager C1 drücken durch die Stahlwelle A2, durch die Zahnräder A, längst der Stahlkreisen 1.

Das Schwergewicht und das Gewicht der Schienen drücken durch die Viereck Seiten FG, auf die Lager B1, dadurch ziehen die Viereck Seiten FG: die Viereck Seiten KF und drücken durch die Lager B1, längst der Eckseiten B1B, auf die Ecken B und das Gewicht der Schienen drückt durch die Ecken B: durch die Stahlwelle A1, durch die Zahnräder A1, längst der Stahlkreisen 1, 1und 2, durch die Stahlwelle A5, durch die Zahnräder A5: auf die Stahlkreisen 1 und längst der Stahlkreisen 1 und ziehen durch die Stahlwelle A4 und die Lager A1 drücken durch die Stahlwelle A4, durch die Zahnräder A, längst der Stahlkreisen 1.

Die Vierecken MNLW, 1 und 2 drücken auf die Bodenlager und auf die Vierecken 1 und 2 drücken: das Schwergewicht, auf die Ecken M und die Vierecken FGIK durch die Lager R, auf die Viereck Seiten NL und das Gewicht der Schienen drückt durch die Viereck Seiten NL, dadurch drücken die Viereck Seiten NL, als Hebel: auf die Bodenlager und durch die Lager U1, gegen das Gewicht der Schienen, längst der Eckseiten U1U, auf die Ecken U, dadurch drücken die Ecken U: durch die Stahlwelle E3, durch die Zahnräder E3, längst der Stahlkreisen 2, 1 und 2 und ziehen durch die Stahlwelle E2 und die Lager P 1 drücken durch die Stahlwelle E2, durch die Zahnräder E, längst der Stahlkreisen 2.

Das Schwergewicht und das Gewicht der Schienen drücken durch die Viereck Seiten MW, auf die Lager El, dadurch ziehen die Viereck Seiten MW: die Viereck Seiten WL und drücken durch die Lager E1, längst der Eckseiten E1E, auf die Ecken E und das Gewicht der Schienen drückt durch die Ecken E: durch die Stahlwelle E1, durch die Zahnräder E1, längst der Stahlkreisen 2, durch die Stahlwelle E5 durch die Zahnräder E5:
auf die Stahlkreisen 2 und längst der Stahlkreisen 2 und ziehen durch die Stahlwelle E4 und die Lager T1 drücken durch die Stahlwelle E4,
längst der Stahlkreisen 2.

Die Stahlkreisen 1, 1 und 2 drücken auf die Zahnräder E5 und auf die Stahlkreisen 1 drücken: die Zahnräder A5, die Zahnwelle S und das Gewicht der Schienen, dadurch drücken und drehen die Stahlkreisen 1: auf die Zahnräder A2, A3 und drehen: sich auf den Zahnräder E und drehen die Zahnräder A.

Die Stahlwellen A drücken durch die Zahnräder A, längst der Stahlkreisen 1 und die Stahlkreisen 1 drehen die Zahnräder A, dadurch drehen die Stahlkreisen 1 und die Zahnräder A, durch die Stahlkreisen 1, die Zahnwellen 1 und 4 in Drehrichtung.

Die Stahlkreisen 1 drücken auf die Zahnräder A2 und A3, dadurch ziehen die Ecken D und C, die Stahlwellen A2 und A1, dadurch drücken die Zahnräder A2 und A1, längst der Stahlkreisenl.

Auf die Stahlkreisen 2, 1 und 2 drücken: die Zahnräder E5, die Zahnwelle Z1 und das Gewicht der Schienen, dadurch drücken und drehen die Stahlkreisen 2:
auf die Zahnwelle Z, auf die Zahnwelle S und drehen: sich auf den Zahnräder E und drehen die Zahnräder E.

Die Stahlwellen E drücken durch die Zahnräder E, längst der Stahlkreisen 2 und die Stahlkreisen 2 drehen die Zahnräder E, dadurch drehen die Stahlkreisen 2 und die Zahnräder E, durch die Stahlkreisen 2, die Zahnwellen 2 und 3, in entgegengesetzter Richtung.

Die Stahlkreisen 2 drücken auf die Zahnräder E3, dadurch ziehen die Ecken U, die Stahlwelle E2.

Die Zahnwellen 1 und 4 drehen: die Stahlkreisen 1, 1 und 2 in Drehrichtung und die Stahlkreisen 2, 1 und 2 in entgegengesetzter Richtung, dadurch drehen die Zahnwellen 1 und 4: sich auf den Lager und drehen die Generatoren: 1, 1 und 2 und 4, 1 und 2.

Der Zylinder, das Zylindergewicht drückt durch die Stahlwellen O und O1, durch die Zahnräder, auf die Stahlkreisen 4, 1 und 2.

Auf die Stahlkreisen 4, 1 und 2 drücken: die Zahnwelle H, die Zahnräder: O und O1 und das Gewicht der Schienen, dadurch drücken und drehen die Stahlkreisen 4: durch die Zahnwelle H1, auf die Stahlkreisen 3, 1 und 2 und drehen: sich auf den Zahnwellen: H und H1, drehen Die Zahnräder: O und O1 und drehen die Zahnwellen: 2 und 3 in entgegengesetzter Richtung.

Auf die Stahlkreisen 3, 1 und 2 drücken: die Zahnwelle Z, die Zahnwelle Hl und das Gewicht der Schienen, dadurch drücken und drehen die Stahlkreisen 3: auf die Zahnwelle H, auf die Zahnwelle Z1 und drehen: sich auf den Zahnwellen: Z und Z1 und drehen die Zahnwellen: 2 und 3 in Drehrichtung.

Die Zahnwellen 2 und 3 drehen: die Stahlkreisen 3, 1 und 2 in Drehrichtung und die Stahlkreisen 4, lund 2 in entgegengesetzter Richtung, dadurch drehen die Zahnwellen 2 und 3: sich auf den Lager und drehen die Generatoren: 2, 1 und 2 und 3, 1 und 2.

## Patentansprüche

1. Schwerkraftanlage - Stromerzeugung mittels Gewichtsdruck durch: einen Zylinder, Schwergewichte, Vierecken 1 und 2: FGIK, ABCD, MNLW, EPUT, Stahlkreisen, Stahlwellen, Zahnräder, Zahnwellen und Generatoren,
dadurch gekennzeichnet,
dass die Stahlkreisen vom Schwergewicht und vom Gewicht der Schienen durch: den Zylinder, Vierecken, Stahlwellen, Zahnräder und Zahnwellen in Drehung kommen, dadurch drehen die Stahlkreisen durch die Zahnwellen, die Generatoren.

2. Stromerzeugung nach Patentanspruch 1,
dadurch gekennzeichnet,
dass das Schwergewicht und das Gewicht der Schienen durch die Vierecken FGIK und ABCD durch die Stahlwellen A, durch die Zahnräder A längst der Stahlkreisen 1, 1 und 2 in Drehrichtung drücken.

3. Stromerzeugung nach Patentanspruch 1,
dadurch gekennzeichnet,
dass das Schwergewicht und das Gewicht der Schienen durch die Vierecken MNLW und EPUT durch die Stahlwellen E, durch die Zahnräder E längst der Stahlkreisen 2, 1 und 2 in entgegengesetzter Richtung drücken.

4. Stromerzeugung nach Patentanspruch 1,
dadurch gekennzeichnet,
dass die Stahlkreisen 1, 1 und 2, auf die Zahnräder E drücken und das Gewicht der Schienen und die Zahnräder A drehen, durch die Stahlkreisen 1, die Zahnwellen 1 und 4 in Drehrichtung.

5. Stromerzeugung nach Patentanspruch 1,
dadurch gekennzeichnet,
dass die Stahlkreisen 2, 1 und 2, auf die Zahnwelle Z drücken und das Gewicht der Schienen und die Zahnräder E drehen, durch die Stahlkreisen 2, die Zahnwellen 1 und 4 in entgegengesetzter Richtung.

6. Stromerzeugung nach Patentanspruch 1,
dadurch gekennzeichnet,
dass die Stahlkreisen 3, 1 und 2, auf die Zahnwelle H drücken und das Gewicht der Schienen und die Zahnwellen Z und H1 drehen, durch die Stahlkreisen 3, die Zahnwellen 2 und 3 in Drehrichtung.

7. Stromerzeugung nach Patentanspruch 1,
dadurch gekennzeichnet,
dass die Stahlkreisen 4, 1 und 2, auf die Zahnwelle H1 drücken und das Gewicht der Schienen und die Zahnwelle H und die Zahnräder O drehen, durch die Stahlkreisen 4, die Zahnwellen 2 und 3 in entgegengesetzter Richtung.

8. Stromerzeugung nach Patentanspruch 1,
dadurch gekennzeichnet,
dass die Stahlkreisen: 1 und 2 und 3 und 4, durch die vier Zahnwellen, die Generatoren drehen.
